Europäisches Patentamt

(19) European Patent Office

Office européen des brevets

(11) Numéro de publication: **0 193 476**
**A1**

## (12) DEMANDE DE BREVET EUROPEEN

(21) Numéro de dépôt: **86420039.9**

(22) Date de dépôt: **07.02.86**

(51) Int. Cl.⁴: **A 23 N 15/00**
**A 23 N 15/04**

(30) Priorité: **08.02.85 FR 8502077**

(43) Date de publication de la demande:
**03.09.86 Bulletin 86/36**

(84) Etats contractants désignés:
**BE CH DE GB IT LI NL SE**

(71) Demandeur: **Bailly, Christian**
**La Borde Route de Bonnée**
**F-45730 Saint-Benoit-Sur-Loire(FR)**

(72) Inventeur: **Bailly, Christian**
**La Borde Route de Bonnée**
**Saint-Benoit-Sur-Loire (Loiret)(FR)**

(72) Inventeur: **Lochon, Valentin**
**Ouzilly**
**Vendeuvre-Du-Poitou (Vienne)(FR)**

(74) Mandataire: **Maureau, Bernard et al,**
**Cabinet GERMAIN & MAUREAU 20, boulevard E.**
**Deruelle B.P. 3011**
**F-69392 Lyon Cédex 03(FR)**

(54) Machine pour le traitement des poireaux.

(57) Cette machine comporte, en combinaison avec un organe sans fin (6, 7) animé d'un mouvement de déplacement continu et assurant la translation impérative des poireaux disposés transversalement par rapport à l'axe de cet organe:

d'une part, deux couteaux (23, 26) d'écartement réglable, stiués de part et d'autre de l'organe transporteur (6, 7) et destinés à sectionner l'un les feuilles des poireaux, et l'autre leurs racines,

et, d'autre part, deux brosses rotatives (39) qui sont situées horizontalement l'une au dessus de l'autre, latéralement et obliquement par rapport à l'organe transporteur (6, 7), en aval des couteaux précités, et entre lesquelles le fût de chaque poireau passe pour son épluchage.

./...

FIG. 2

# MACHINE POUR LE TRAITEMENT DES POIREAUX

Pour leur bonne présentation à la vente, les poireaux doivent avoir subi un traitement comprenant les opérations suivantes : coupe de leur fût et de leurs feuilles à la longueur voulue, épluchage et lavage. S'il existe diverses machines permettant les unes l'opération de coupe, et les autres le lavage, aucune ne permet l'ensemble des opérations.

L'invention pallie cette lacune. Elle a pour objet une machine comportant, en combinaison avec un organe sans fin animé d'un mouvement de déplacement continu et assurant la translation impérative des poireaux disposés transversalement par rapport à l'axe de cet organe :

- d'une part, deux couteaux d'écartement réglable, situés de part et d'autre de l'organe transporteur et destinés à sectionner l'un les feuilles des poireaux, et l'autre leurs racines,

- et, d'autre part, deux brosses rotatives qui sont situées horizontalement l'une au dessus de l'autre, latéralement et obliquement par rapport à l'organe transporteur , en aval des couteaux précités, et entre lesquelles le fût de chaque poireau passe pour son épluchage.

Pour assurer un entraînement positif des poireaux et soutenir leurs feuilles en vue de et pendant l'opération de coupe, la machine comporte, en outre :

- d'une part, un organe sans fin qui, situé parallèlement et latéralement à l'organe transporteur principal, est animé d'une vitesse de translation identique et est muni de taquets entraînant les poireaux par leurs fûts,

- et, d'autre part, un organe sans fin qui, situé parallèlement à l'organe transporteur, mais de l'autre côté, est animé aussi d'une vitesse de translation identique et sert, par son brin supérieur, de support aux feuilles des poireaux.

Le premier de ces deux organes transporteurs est constitué par une chaîne, le second par un cordon.

Quant à l'organe transporteur principal, c'est-à-dire celui central, il est avantageusement constitué par deux bandes sans fin constituées en un matériau relativement souple, situées l'une au dessus de l'autre, mais en contact l'une avec l'autre et entraînées impérativement l'une et l'autre.

Un même moteur est d'ailleurs de préférence utilisé pour entraîner ces trois organes transporteurs, l'essentiel étant que leurs vitesses de translation soient identiques.

Suivant une forme d'exécution de l'invention, chacun des deux couteaux est constitué par une scie circulaire, et les deux brosses d'épluchage sont constituées chacune par un mandrin porteur de doigts radiaux réalisés en matière souple, avantageusement en caoutchouc. Ces deux brosses sont portées par une plaque verticale qui occupe une position fixe, mais réglable, sur une embase solidaire du bâti de la machine, la modification de la position de cette plaque permettant de régler l'obliquité des brosses par rapport à l'axe longitudinal de la machine.

La vitesse de rotation de ces brosses est réglable indépendamment de celle des autres organes de la machine, et ce en fonction des caractéristiques et de l'état des poireaux qui sont plus ou moins tendres, plus ou moins sales... Pour faciliter leur épluchage par les brosses, il est d'ailleurs prévu des jets d'eau dirigés entre les brosses et sur les poireaux.

Bien que ces brosses doivent pouvoir être entraînées à une vitesse non fonction de celle des autres organes de la machine, un seul et même moteur est utilisable. Il s'agit, par exemple, d'un moteur électrique entraînant une pompe hydraulique qui alimente :

- d'une part, un moteur hydraulique entraînant, par pignons et chaîne, les arbres des organes d'entraînement et de coupe des poireaux,

- et, d'autre part, deux moteurs hydrauliques entraînant les arbres des deux brosses.

Tous les organes précités sont conçus et agencés pour couper les poireaux à la longueur voulue et les éplucher. Leur bonne présentation nécessite, en outre, de les laver. Pour ce lavage, la machine objet de l'invention est équipée de deux rampes d'arrosage situées en aval des brosses d'épluchage.

Afin de contrôler l'état des poireaux après leur coupe et leur épluchage, la machine comporte, en outre, une table d'inspection qui est située entre les deux rampes d'arrosage et est constituée par plusieurs cordons sans fin qui, se déplaçant parallèlement et à la même vitesse, reçoivent leur mouvement de l'un des arbres de l'organe transporteur sans fin principal et se déplacent à la même vitesse que lui.

L'invention sera bien comprise, d'ailleurs, et ses avantages ainsi que d'autres caractéristiques ressortiront bien de la description qui suit, en référence au dessin schématique annexé, représentant, à titre d'exemple non limitatif, une forme d'exécution de cette machine :

- Figure 1 en est une vue générale en plan par dessus,

- Figure 2 est, à plus grande échelle, une vue en perspective de sa zone dans laquelle sont effectués la coupe des poireaux, leur épluchage et une première phase de lavage,

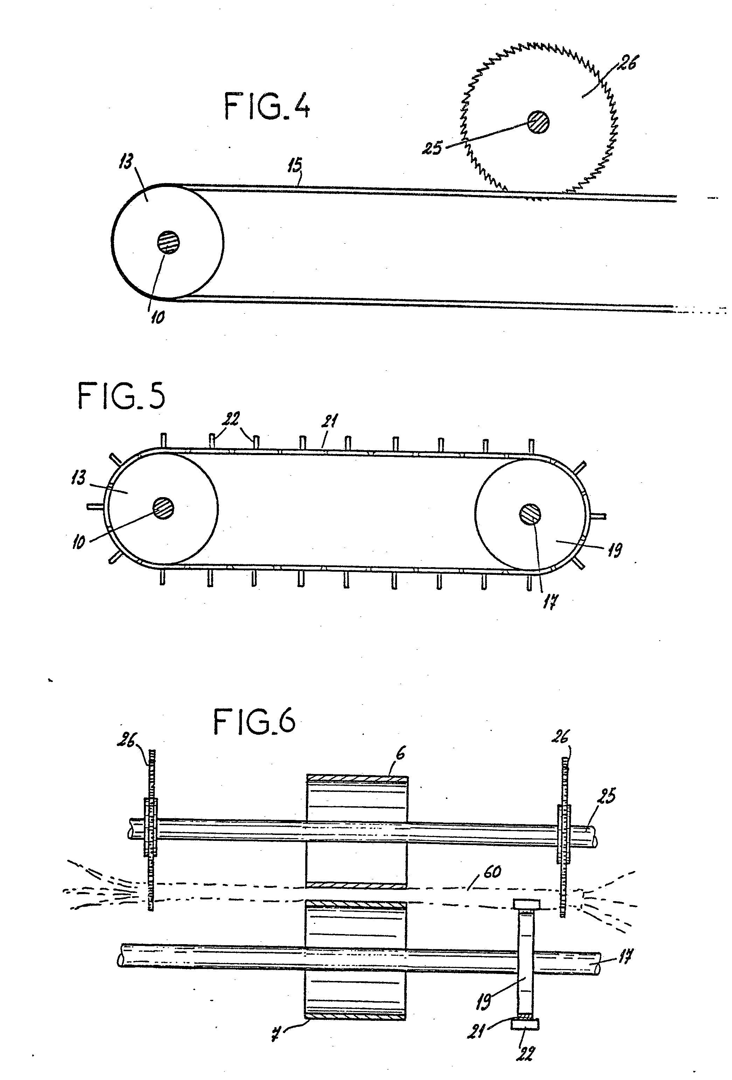

- Figures 3, 4 et 5 sont des vues en coupe longitudinale respectivement suivant 3-3, 4-4 et 5-5 de figure 1 et,

- Figure 6 est une vue en coupe transversale suivant 6-6 de figure 1.

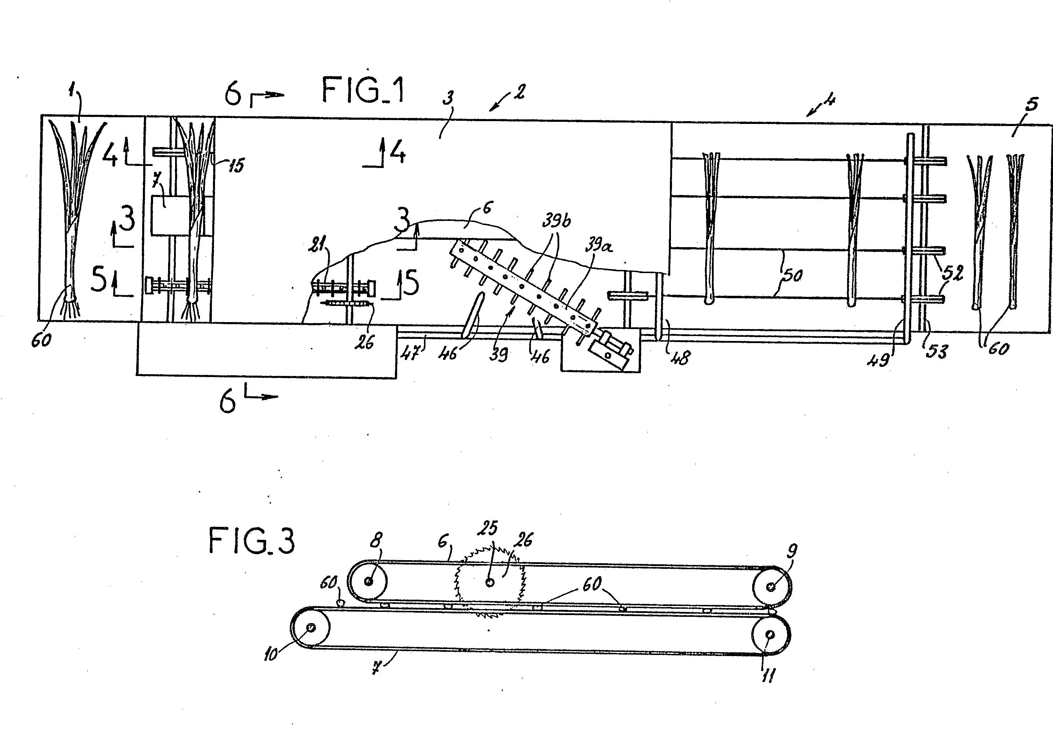

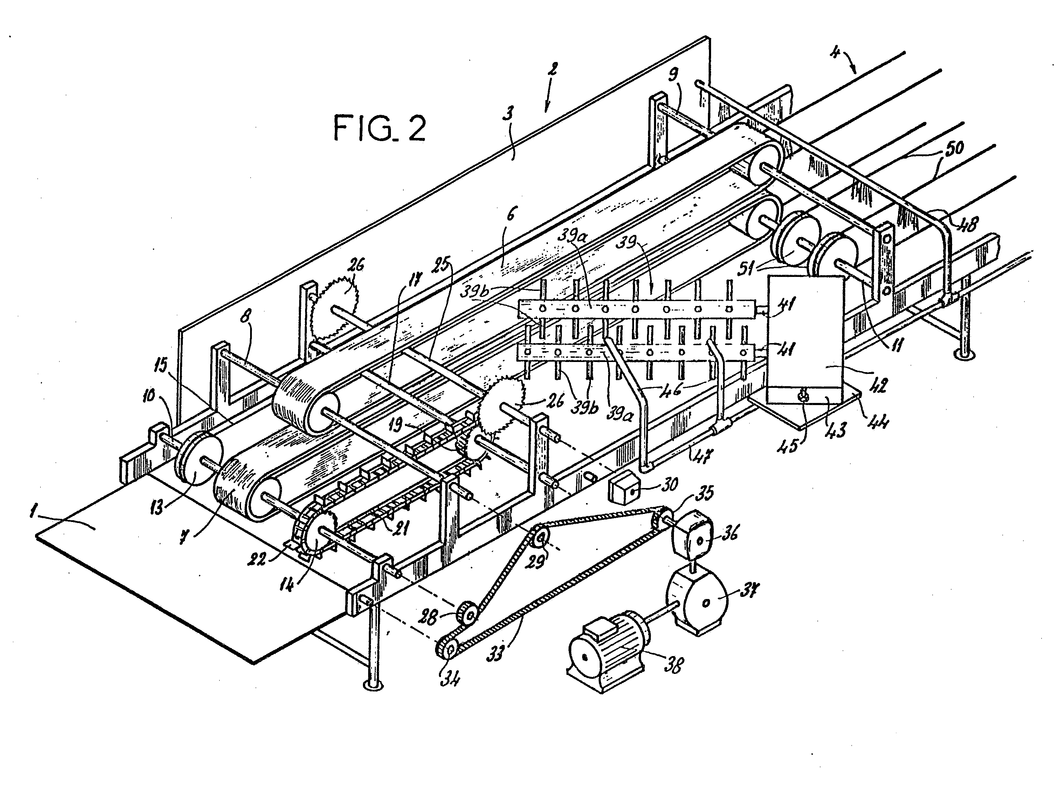

La figure 1 illustre, de façon très schématique, l'ensemble de la machine qui comporte une table d'entrée (1) recevant les poireaux à traiter, une zone principale désignée de façon générale par (2) et recouverte par un carter (3), puis une table d'inspection (4) et finalement une table de sortie (5) sur laquelle sont réceptionnés les poireaux ayant subi les divers traitements, successivement de coupe, d'épluchage et de lavage.

C'est dans la zone principale (2) que sont effectués les deux traitements de coupe et d'épluchage des poireaux.

Cette zone principale (2) comprend un organe transporteur animé d'un mouvement de déplacement continu. Ce transporteur est constitué par deux bandes sans fin (6) et (7) qui sont placées l'une au dessus de l'autre et sont en contact par le brin inférieur de la bande (6) avec le brin supérieur de la bande (7). Ces deux bandes sans fin (6) et (7) sont constituées en un matériau relativement souple, avantageusement un matériau cellulaire ; et des moyens, non représentés au dessin, sont prévus pour assurer que le brin inférieur de la bande supérieure (6) conserve constamment son contact avec le brin supérieur de la bande inférieure (7). Ces deux bandes sans fin (6) et (7) sont portées et entraînées par des poulies calées sur des arbres respectivement (8) et (9) pour le tapis supérieur (6), et (10) et (11) pour le tapis inférieur (7). Parmi ces arbres, ceux (8) et (10) sont moteurs, et ils tournent évidemment à la même vitesse.

Sur l'arbre moteur (10) situé dans la partie amont de la machine, sont calés, outre la poulie d'entraînement du tapis (7), une deuxième poulie (13) et un pignon (14) disposés de part et d'autre de la poulie précitée. Avec la poulie (13) est en prise un cordon sans fin (15) qui passe par ailleurs sur une autre poulie portée par l'arbre (11) ; et avec le pignon (14) engrène une chaîne (21) qui passe par ailleurs sur un pignon (19) porté par un arbre (17) parallèle à celui (10). La chaîne (21) est équipée de petites palettes transversales (22).

Parallèlement aux arbres (8), (10) et (17) est placé un quatrième arbre (25) situé sensiblement au même niveau que l'arbre (8). Cet arbre (25) porte deux scies circulaires (26) dont la position sur cet arbre est réglable.

Les deux arbres (8) et (10) sont des arbres moteurs qui tournent à la même vitesse. Pour cela, ils portent, à l'une de leurs extrémités, des pignons désignés respectivement par (28) et (29). Avec ces pignons engrène une chaîne (33) qui passe sur un pignon de renvoi (34) et reçoit son mouvement moteur d'un pignon (35) dont l'arbre est entraîné par un moteur hydraulique (36) alimenté en huile par une pompe (37) recevant elle-même son mouvement d'un moteur électrique (38). Un autre moteur hydraulique (30) entraîne directement l'arbre (25).

Dans la zone principale (2), deux brosses (39) sont placées en aval du mécanisme précité. Ces deux brosses sont chacune constituée par un mandrin (39a) portant une pluralité de doigts radiaux en caoutchouc. Ces deux brosses sont disposées à la fois horizontalement et obliquement par rapport à l'axe longitudinal de la machine ; et elles sont situées latéralement par rapport au transporteur principal (6, 7), en aval par rapport au transporteur latéral (21). Ces brosses sont portées par des arbres (41) entraînés chacun par un moteur hydraulique alimenté par la pompe (37). Les paliers dans lesquels tournent les arbres (41) porteurs des brosses (39) sont montés sur une plaque verticale (42) reposant par son embase (43) sur un support horizontal (44) solidaire du bâti de la machine. Par un boulon (45), il est possible à la fois de fixer et de régler la position angulaire de la plaque (42) sur le support fixe (44), ce qui permet de régler l'obliquité des deux brosses (39) par rapport à l'axe longitudinal de la machine. Deux tubes (46) branchés sur une canalisation d'amenée d'eau (47) permettent constamment d'envoyer des jets d'eau sur les brosses et entre les brosses.

Dans sa partie avale, la zone principale (2) comporte une rampe de pulvérisation (48) ; et une deuxième rampe de pulvérisation (49) est prévue immédiatement avant la table de sortie (5).

Les deux rampes de pulvérisation (48) et (49) sont séparées

5

par la table d'inspection (4). Cette table est constituée par plusieurs cordons sans fin (50) qui sont entraînés par des poulies (51, 52) dont celles (51) sont portées par l'arbre moteur (11) et dont celles (52) sont montées sur un arbre libre (53).

Il a été indiqué plus haut que les arbres (8), (10) et donc (17) tournent à la même vitesse. Les organes commandés par ces arbres travaillent donc à la même vitesse ; il en est de même pour les cordons sans fin (50) qui constituent la table d'inspection puisque ces cordons sont entraînés par l'arbre (11) qui est lui-même entraîné grâce au tapis sans fin (7) par l'arbre moteur (10).

Les brosses (39) présentent, par contre, la particularité de pouvoir être entraînées à une vitesse réglable, indépendamment de la vitesse de rotation et de déplacement de tous les autres organes de la machine.

Les poireaux (60) ayant été admis sur la table d'entrée (2) sont déposés un à un transversalement sur l'extrémité amont du brin supérieur de la bande sans fin inférieure (7) ; ils sont ainsi amenés à être pincés entre le tapis inférieur (7) et le tapis supérieur (6), ce qui entraîne leur entraînement impératif à l'intérieur de la machine. Pour cet entraînement, les poireaux doivent occuper une position transversale rigoureuse, afin que leur coupe s'effectue dans de bonnes conditions. Ce résultat est obtenu grâce au transporteur latéral (21) constitué par une chaîne sans fin dont les palettes (22) entraînent impérativement les poireaux par leurs fûts à proximité de leurs racines. Les poireaux sont donc à la fois soutenus et entraînés par la chaîne (21), en même temps que par l'organe transporteur principal (6, 7) ; et simultanément, les feuilles des poireaux sont elles-mêmes soutenues par le transporteur latéral (15) constitué par le cordon sans fin se déplaçant sur les poulies (13) et (16).

Etant ainsi positivement entraînés, les poireaux sont amenés au dispositif de coupe destiné à les sectionner d'une part, à l'extrémité de leurs fûts ou à la naissance de leurs racines, et d'autre part, dans la zone de leur feuillage.

Ce dispositif de coupe est constitué par les deux scies (26). Chaque poireau est en effet sectionné en passant sous ces scies. Il est d'ailleurs à noter que ces scies (26) sont de position réglable sur l'arbre (25), afin de régler leur écartement et donc de régler la coupe des poireaux.

Après avoir ainsi été coupés, les poireaux sont amenés par l'organe transporteur principal (6, 7) au dispositif d'épluchage. Ce dispositif est constitué par les deux brosses (39) qui tournent à une vitesse périphérique différente de la vitesse d'entraînement des poireaux par le transporteur sans fin (6, 7). C'est en passant ainsi entre les deux brosses (39) que les poireaux sont épluchés. Les conditions de cet épluchage sont déterminées par l'angle réglable d'inclinaison des brosses (39) par rapport à l'axe longitudinal de la machine, et par la vitesse de rotation des arbres (41) portant les brosses (39).

Après avoir été ainsi épluchés, les poireaux sont amenés par le transporteur sans fin principal (6, 7) sur les cordons (50) qui les acheminent jusqu'à la table de sortie (5) ; et c'est d'abord au moment de leur réception par les cordons (50), puis avant leur arrivée sur la table de sortie (5) que les poireaux sont soumis à deux opérations de lavage, par passage sous les rampes de pulvérisation d'eau (48) et (49). Lors de leur parcours entre ces deux rampes, les poireaux circulent dans une zone dite d'inspection, dans laquelle peuvent être prélevés les poireaux ne répondant pas aux critères souhaités, notamment en ce qui concerne leur longueur de coupe, leur état de propreté...

Comme il va de soi, l'invention ne se limite pas à la seule forme d'exécution de cette machine qui a été ci-dessus indiquée à titre d'exemple ; elle en embrasse, au contraire, toutes les variantes de réalisations.

7

REVENDICATIONS

1 - Machine pour le traitement des poireaux, caractérisée en ce qu'elle comporte, en combinaison avec un organe sans fin (6, 7) animé d'un mouvement de déplacement continu et assurant la translation impérative des poireaux disposés transversalement par rapport à l'axe de cet organe :

- d'une part, deux couteaux (26) d'écartement réglable, situés de part et d'autre de l'organe transporteur (6, 7) et destinés à sectionner l'un les feuilles des poireaux, et l'autre leurs racines,

- et, d'autre part, deux brosses rotatives (39) qui sont situées horizontalement l'une au dessus de l'autre, latéralement et obliquement par rapport à l'organe transporteur (6, 7), en aval des couteaux précités, et entre lesquelles le fût de chaque poireau passe pour son épluchage.

2 - Machine pour le traitement des poireaux selon la revendication 1, caractérisée en ce qu'elle comporte :

- d'une part, un organe sans fin (21) qui, situé parallèlement et latéralement à l'organe transporteur principal (6, 7), est animé d'une vitesse de translation identique et est muni de taquets entraînant les poireaux par leurs fûts,

- et, d'autre part, un organe sans fin (15) qui, situé parallèlement à l'organe transporteur, mais de l'autre côté, est animé aussi d'une vitesse de translation identique et sert, par son brin supérieur, de support aux feuilles des poireaux.

3 - Machine pour le traitement des poireaux selon les revendications 1 et 2, caractérisée en ce que son organe transporteur principal (6, 7) est constitué par deux bandes sans fin (6, 7) constituées en un matériau relativement souple, situées l'une au dessus de l'autre, mais en contact l'une avec l'autre et entraînées impérativement l'une et l'autre.

4 - Machine pour le traitement des poireaux selon l'une quelconque des revendications 1 à 3, caractérisée en ce que chacun de ses deux couteaux (26) est constitué par une scie circulaire de position réglable sur son arbre d'entraînement (25).

5- Machine pour le traitement des poireaux selon l'une quelconque des revendications 1 à 4, caractérisée en ce que ses deux brosses (39) sont portées par une plaque verticale (42) qui occupe une position fixe, mais réglable sur une embase (43) solidaire du bâti de la machine,

8

la modification de la position de cette plaque permettant de régler l'obliquité des brosses par rapport à l'axe longitudinal de la machine.

6 - Machine pour le traitement des poireaux selon l'une quelconque des revendications 1 à 5, caractérisée en ce que ses deux brosses (39) sont constituées chacune par un mandrin porteur de doigts radiaux réalisés en matière souple.

7 - Machine pour le traitement des poireaux selon l'une quelconque des revendications 1 à 6, caractérisée en ce qu'elle comporte des tubes (46) par lesquels des jets d'eau sont dirigés entre les brosses (39) et sur les poireaux.

8 - Machine pour le traitement des poireaux selon l'une quelconque des revendications 1 à 7, caractérisée en ce qu'une pompe hydraulique (37) entraînée par un moteur électrique (38) alimente :

- un moteur hydraulique (36) entraînant, par pignons (35, 28 et 29) et chaîne (33), les arbres (8) et (10) des organes d'entraînement et de coupe des poireaux,

- un moteur hydraulique (30) entraînant l'arbre (27) porteur des deux scies (26),

- et deux moteurs hydrauliques entraînant les arbres des deux brosses (39).

9 - Machine pour le traitement des poireaux selon l'une quelconque des revendications 1 à 8, caractérisée en ce qu'elle comporte au moins une rampe d'arrosage (48) située en aval des brosses d'épluchage (39).

10 - Machine pour le traitement des poireaux selon l'une quelconque des revendications 1 à 9, caractérisée en ce qu'elle comporte une table d'inspection (4) qui est située entre deux rampes d'arrosage (48, 49) et est constituée par plusieurs cordons sans fin (50) qui, se déplaçant parallèlement et à la même vitesse, reçoivent leur mouvement de l'un (11) des arbres de l'organe transporteur sans fin principal (6, 7) et se déplacent à la même vitesse que lui.

**FIG.1**

**FIG.3**

FIG.2

0193476

FIG.4

FIG.5

FIG.6

**0193476**

Numéro de la demande

EP 86 42 0039

## Office européen des brevets

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 599 565 (J. KUPERINDA) <br> * Page 1, ligne 44 - page 3, ligne 21; figures 1,3,4,6 * | 1 | A 23 N 15/00 <br> A 23 N 15/04 |
| | --- | | |
| A | GB-A-1 043 730 (P.J. EDMONDS LTD.) | | |
| | --- | | |
| A | GB-A-1 065 901 (Y. BRUEL et al.) | | |
| | --- | | |
| A | FR-A-1 480 231 (F. CARREE) | | |
| | ----- | | |

**DOMAINES TECHNIQUES RECHERCHES (Int. Cl.4)**

A 23 N

Le présent rapport de recherche a été établi pour toutes les revendications

| Lieu de la recherche | Date d'achèvement de la recherche | Examinateur |
|---|---|---|
| LA HAYE | 12-05-1986 | NEHRDICH H.J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503.03.82